# EUROPÄISCHE PATENTSCHRIFT

(11) **EP 2 513 194 B1**
(45) Veröffentlichungstag und Bekanntmachung des Hinweises auf die Patenterteilung: **31.08.2016**
(21) Anmeldenummer: 10792838.4
(22) Anmeldetag: 10.12.2010
(51) Int. Cl.: C08G 65/00

(54) **FUNKTIONELLE VERZWEIGTE POLYETHER COPOLYMERE SOWIE VERFAHREN ZU IHRER HERSTELLUNG**
FUNCTIONALLY BRANCHED POLYETHER COPOLYMERS AND METHOD FOR THE PRODUCTION THEREOF
COPOLYMÈRES DE POLYÉTHERS RAMIFIÉS FONCTIONNELS ET LEUR PROCÉDÉ DE PRÉPARATION

(30) Priorität: 18.12.2009 DE 102009059104
(43) Veröffentlichungstag der Anmeldung: 24.10.2012
(73) Patentinhaber: Johannes Gutenberg-Universität Mainz, vertreten durch den Präsidenten, 55128 Mainz (DE)
(72) Erfinder: FREY, Holger, 79312 Emmendingen (DE); WILMS, Daniel, 55232 Alzey (DE); WURM, Frederik, 65201 Wiesbaden (DE)
(74) Vertreter: Plate, Jürgen
(86) Internationale Anmeldenummer: PCT/EP2010/007553
(87) Internationale Veröffentlichungsnummer: WO 2011/072829

(56) Entgegenhaltungen:
- EP-A2- 0 116 978
- WO-A2-00/37532
- WO-A2-2005/037911
- DE-A1- 10 211 664
- DIMITROV P ET AL: "High molecular weight functionalized poly(ethylene oxide)", POLYMER, ELSEVIER SCIENCE PUBLISHERS B.V, GB, Bd. 43, Nr. 25, 1. Januar 2002 (2002-01-01), Seiten 7171-7178, XP004389491, ISSN: 0032-3861, DOI: DOI:10.1016/S0032-3861(02)00459-7
- SUNDER A ET AL: "Molecular Nanocapsules Based on Amphiphilic Hyperbranched Polyglycerols", ANGEWANDTE CHEMIE. INTERNATIONAL EDITION, WILEY VCH VERLAG, WEINHEIM, Bd. 38, Nr. 23, 3. Dezember 1999 (1999-12-03), Seiten 3552-3555, XP002995767, ISSN: 1433-7851, DOI: DOI:10.1002/(SICI)1521-3773(19991203)38:23 &LT,3552::AID-ANIE3552&GT,3 .0.CO,2-G
- FREY ET AL: "Hyperbranched PEG by Random Copolymerization of Ethylene Oxide and Glycidol", MACROMOLECULAR RAPID COMMUNICATIONS, Bd. 31, 5. August 2010 (2010-08-05), Seiten 1811-1815, XP002621645, wileyonlinelibrary.com

## Beschreibung

Die vorliegende Erfindung betrifft hoch-funktionelle verzweigte Poly(ethylenglykol)e (PEGs) auf Basis von substituierten und unsubstituierten Oxiranen sowie Verfahren zu ihrer Herstellung und chemischen Modifikation für biomedizinische, pharmakologische und kosmetische Anwendungen.

Verzweigte PEG-Analoga gemäß der vorliegenden Erfindung eignen sich für die industrielle Herstellung von biologisch und pharmakologisch wirksamen Mitteln. Zudem können die verzweigten PEG-Analoga gut mit unpolaren Lipidstrukturen verknüpft werden, so dass sie sich als selektive Wirtsmoleküle für kosmetische oder galenische Wirkstoffe eignen, wobei die Freisetzung eines Wirkstoffs, der kovalent angebunden oder auch nicht kovalent eingelagert werden kann, genau kontrollierbar ist. Als weitere Anwendungen sind Beschichtungsmaterialen zum Modifizieren von Oberflächen oder Fasern sowie Additive für Klebstoffe oder der Einsatz zur Anpassung der rheologischen Eigenschaften von viskosen Materialien vorgesehen.

PEGs oder Poly(ethylenoxid)e (PEO)s werden üblicherweise durch anionische ringöffnende Polymerisation von Ethylenoxid mit einer geeigneten Base erhalten. Aufgrund seiner guten thermischen Stabilität und geringen Reaktivität und Toxizität gehört PEG zu den am häufigsten verwendeten biokompatiblen wasserlöslichen Polymeren. Wegen seines inhärenten Kristallisationsgrades sind die Einsatzmöglichkeiten von PEG jedoch oft beschränkt.

Weiterführende Information über PEG und seine Anwendungen sind der Fachliteratur wie z.B. J. M. Harris and S. Zaplinsky, "Poly(ethylene glycol) - Chemistry and Biological Applications", American Chemical Society, Washington, DC, 1997 zu entnehmen.

Hyperverzweigtes Polyglycerin (hbPG) weist ähnlich wie PEG hervorragende Biokompatibilität und thermische Stabilität auf. Im Gegensatz zu dem linearen PEG, beinhaltet hbPG eine hohe Zahl an funktionellen Hydroxylgruppen, so dass sich verschiedene Möglichkeiten zur chemischen Modifikation eröffnen. HbPG wird durch kationische oder anionische ringöffnende Polymerisation von Glycidol erhalten. Das Molekulargewicht und die Polydispersität von hbPG werden durch langsame Zugabe kontrolliert, gemäß den von Sunder et al., "Controlled synthesis of hyperbranched polyglycerols by ring-opening multibranching polymerization" Macromolecules 1999, 32, 4240 oder von Wilms et al., "Hyperbranched polyglycerols with elevated molecular weights - a facile two-step synthesis protocol based on polyglycerol macroinitiators" Macromolecules 2009, 42, 3230 beschriebenen Methoden.

Aufgrund seiner zahlreichen Hydroxylgruppen ist hbPG nur in Wasser, niedermolekularen Alkoholen und stark polaren aprotischen Lösungsmitteln wie Pyridin, Dimethylformamid (DMF), N-Methyl-2-pyrrolidon (NMP) oder Dimethylsulfoxid (DMSO), die aufgrund ihres hohen Siedepunktes und/oder ihrer Toxizität einen beschränkten Anwendungsbereich haben, löslich. Zudem ist hbPG bzw. das Ausgangsprodukt Glycidol teuer und kommt aus wirtschaftlichen Gründen nur für ausgewählte Anwendungen in Betracht. Detaillierte Information zu hbPG findet sich in Wilms et al., "Hyperbranched polyglycerols: from the controlled synthesis of biocompatible polyether polyols to multipurpose applications" Acc. Chem. Res. 2009, doi: 10.1021/ar900158p.

Seit Jahren werden große Anstrengungen unternommen, die vorteilhaften Eigenschaften von PEG und hbPG in einem Copolymer zu vereinen. Aufgrund der äußerst komplexen Polymerchemie und der sehr unterschiedlichen physikalischen Eigenschaften der Monomere Ethylenoxid und Glycidol war diesen Bemühungen bislang nur geringer Erfolg beschieden.

So beschreiben Hawker et al., "Hyperbranched poly(ethylene glycol)s: a new class of ionconducting materials" Macromolecules 1996, 29, 3831 ein mehrstufiges Verfahren, bei dem verzweigte PEG-Derivate unter hohem präparativen Aufwand in ein amorphes Material mit breiter Streuung des Molekulargewichts (Polydispersität > 2.2) und einer Unterbrechung der reinen Polyetherstruktur durch AB₂-Makromonomere mit aromatischen Verzweigungsstellen überführt werden.

Feng et al., "Toward an easy access to dendrimer-like poly(ethylene oxide)s" J. Am. Chem. Soc. 2005, 127, 10956 offenbaren eine iterative Methode zur Gewinnung von dendrimerartigen PEOs. Dabei wird hochtoxisches Osmiumtetraoxid (O_{S}O₄) eingesetzt, um mehrfach hydroxylierte Vorprodukte herzustellen. Spuren des Osmiumtetraoxids gelangen zwangsläufig in das Endprodukt und verhindern eine Anwendung für biomedizinische Zwecke.

Lapienis et al., "One-pot synthesis of star-shaped macromolecules containing polyglycidol and poly(ethylene oxide) arms", Biomacromolecules 2005, 6, 752, sowie andere Forschungsgruppen haben die Synthese von sternförmigen Polymeren auf Basis von PEO eingehend untersucht. Diese sternförmigen Polymere mit mehreren - typischerweise 1 bis 6 - PEG-Armen, die im Laufe der letzten 20 Jahre eingehend beschrieben wurden, können wegen ihrer langen linearen PEO-Segmente leicht kristallisieren. Demgegenüber behindert die Zweig-auf Zweig Struktur von verzweigten PEGs, wie sie in der vorliegenden Patentanmeldung beschrieben werden, die Kristallisation in beträchtlichem Maße.

Allerdings ist es bis heute nicht gelungen, eine einfache und effektive Methode zur Herstellung von verzweigten PEGs zu entwickeln. Der naheliegende Ansatz, eine statistische Copolymerisation mit zyklischem Glycidol als latenter Quelle für AB₂-Verzweigungsstrukturen einzusetzen, resultiert in amorphen, biokompatiblen verzweigten PEG-Derivaten, die ausschließlich aus aliphatischen Polyether-Einheiten bestehen. Allerdings existiert eine solche Synthese bislang nicht. Dimitrov et al., "High molecular weight functionalized poly(ethylene oxide)" Polymer 2002, 43, 7171, berichten über Versuche, Ethylenoxid und Glycidol zu copolymerisieren, wobei eine Verbindung mit sehr breiter Verteilung der Molekulargewichte erhalten wurde. Zudem wird ein sehr geringer Einbau der Glycerin-Verzweigungseinheiten in die Polymere beobachtet. Bemühungen, die Eigenschaften dieser Copolymere zu kontrollieren, war bislang kein Erfolg beschieden.

US 7,196,145 offenbart verschiedene Verfahren für die statistische Copolymerisation von Ethylenoxid und Gycidol. Die darin beanspruchten Verbindungen stehen nicht in Einklang mit den offenbarten Daten. Offensichtlich tritt in erheblichem Umfang Homopolymerisation auf, die zu einer unkontrollierte Mischung von Homo- und Copolymeren führt. Dies ist in Einklang mit theoretischen Betrachtungen und auf die Verwendung von monofunktionellen Initiatormolekülen sowie ungeeignete Reaktionsbedingungen zurückzuführen.

Mittels der vorstehenden bekannten Synthesemethoden werden PEG-basierte Verbindungen erhalten, die einen oder mehrere der folgenden Nachteile aufweisen:
- Die Synthese ist präparativ sehr aufwendig, umfasst zahlreiche zeitintensive Schritte und/oder anspruchsvolle Reinigungsverfahren und ist daher unwirtschaftlich.
- Die Molekulargewichte der erhaltenen PEG-Verbindungen sind nicht steuerbar und/oder streuen über einen weiten Bereich und weisen eine hohe Polydispersität auf.
- Die Verwendung für biologische und medizinische Anwendungen ist stark eingeschränkt oder nicht vertretbar, weil die erhaltenen PEG-Verbindungen keine ungestörten Polyethersegmente enthalten und/oder Spuren von toxischen Substanzen wie Osmiumtetraoxid aufweisen.
- Die für die Synthese erforderlichen Reaktionsbedingungen behindern die statistische Copolymerisation von Ethylenoxid mit Glycidol und fördern Homopolymerisation.
- Die erhaltenen PEG-Verbindungen enthalten lange PEO-Segmente und kristallisieren praktisch ausnahmslos unter Normalbedingungen.

Die Aufgabe der vorliegenden Erfindung besteht darin, ein einfaches und wirtschaftliches Verfahren zur Herstellung von aliphatischen, hoch-funktionalisierten und (folge)verzweigten

Verbindungen bereitzustellen. Gegenstand der vorliegenden Erfindung sind Verfahren und Produkte gemäß den anhängenden Ansprüchen 1-16.

Diese Aufgabe wird gelöst durch ein Verfahren, umfassend die Schritte:
(a) Mischen von zwei oder mehreren Monomeren gewählt aus der Gruppe umfassend Oxirane, schwefelhaltige Oxirananaloga und stickstoffhaltige Oxirananaloga mit einem oder mehreren Initiatoren gewählt aus der Gruppe umfassend deprotonierte Alkohole, Amine sowie Amine mit Schutzgruppen, wobei der/die Initiatoren 2 bis 100 funktionelle Gruppen aufweisen und das molare Verhältnis der Monomere zu dem/den Initiatoren (I) im Bereich von 6:1 bis 5000:1 liegt;
(b) Initiieren einer anionischen ringöffnenden Polymerisation; und
(c) Terminieren der Polymerisation durch Zuführen eines protischen Reagenz.

Zweckmäßig werden in Schritt (a) Initiatoren mit 2 bis 50, 3 bis 50, 4 bis 30, 4 bis 20 oder 10 bis 15 funktionellen Gruppen verwendet.

Vorzugsweise werden in Schritt (a) die Oxirane Ethylenoxid (1,2-Epoxyethan) und Glycidol (Oxiranylmethanol) mit molaren Anteilen von 0,5 bis 97 % beziehungsweise von 3 bis 99 %, bezogen auf die Gesamtheit der Monomeren, eingesetzt.

Insbesondere wird in Schritt (a) mindestens ein Monomer gewählt aus der Gruppe umfassend Propylenoxid (1,2-Epoxypropan), 1,2-Epoxybutan (Ethyloxiran), Allylglycidylether (1-Allyloxy-2,3-Epoxypropan), Benzylglycidylether (Benzyloxymethyloxiran), *tert-*Butylglycidylether (*tert*-Butoxymethyloxiran), Ethoxyethylglycidylether, Styroloxid (2-Phenyloxiran), Aziridin (Ethylenimin) und Thiiran (Ethylensulfid) eingesetzt, wobei der molare Anteil des mindestens einen aus der Gruppe gewählten Monomers 1 bis 30 %, bezogen auf die Gesamtheit der Monomeren, beträgt.

Weitere erfindungsgemäße Ausführungsformen des Verfahrens zeichnen sich dadurch aus, dass:
- in Schritt (a) als Initiator ein Alkohol mit 2 bis 100, 2 bis 50, 3 bis 50, 4 bis 30, 4 bis 20 oder 10 bis 15 funktionellen Gruppen eingesetzt wird, wobei 5 bis 30 % der funktionellen Gruppen deprotoniert sind;
- in Schritt (a) ein Amin als Initiator eingesetzt wird;
- in Schritt (a) zum Deprotonieren des Initiators ein Mittel gewählt aus der Gruppe umfassend Alkali-Naphthalide, Diphenylmethyl-Alkalimetalle, Alkalimetalle, Hydroxide, Hydride, Alkoxide sowie Mischungen davon, eingesetzt wird;
- flüchtige Nebenprodukte der Deprotonierung aus der Reaktionsmischung entfernt werden;
- das Verfahren in einer Niederdruckatmosphäre von 0,0001 bis 0,95 bar ausgeführt wird;
- das Verfahren in einer Hochdruckatmosphäre von 1,1 bis 40 bar ausgeführt wird;
- das Verfahren bei einer Temperatur von 40 bis 150 °C ausgeführt wird;
- in Schritt (a) eines oder mehrere der Monomere kontinuierlich zugeführt wird (werden);
- in Schritt (a) ein schwefelhaltiges Oxirananalogon als eines der Monomere eingesetzt wird;
- in Schritt (c) ein Alkohol oder Wasser verwendet wird, um die Polymerisation zu terminieren; und
- das Verfahren einen weiteren Schritt (d) umfasst, in dem die in Schritt (c) erhaltene Verbindung mit einem funktionalisierenden Reagenz umgesetzt wird, wobei das Reagenz mit OH-Gruppen der besagten Verbindung reagiert.

Das erfindungsgemäße Verfahren ermöglicht die Herstellung von hoch-funktionalisierten verzweigten PEG-Derivaten (im Folgenden als bPEG bezeichnet), wobei die Eigenschaften der erhaltenen bPEG, wie Funktionalisierung, thermische und chemische Stabilität, Biokompatibilität sowie Viskosität und Löslichkeit zielgerichtet an spezifische Anwendungen angepasst werden.

Die Verwendung polyfunktioneller Initiatoren mit mindestens 2 funktionellen Gruppen stellt eine wichtige Voraussetzung dar, um bPEG mit einer niedrigen Polydispersität M̅_{w}/M̅ₙ < 3 zu erhalten.

Insbesondere wurde gefunden, dass bPEG mit gewünschten Eigenschaften erhalten werden, indem verschiedene substituierte oder nicht-substituierte Oxirane in einem bestimmten in weiten Bereichen variierbaren Molverhältnis mit Glycidol copolymerisiert werden.

Dementsprechend schafft die Erfindung ein Verfahren zur Herstellung von hoch-funktionalisierten aliphatischen bPEGs, das in einer vorteilhaften Ausführungsform mindestens die folgenden Schritte umfasst:
(i) Bereitstellen eines Initiatorkerns durch 1) Deprotonierung eines funktionalisierten Alkohols mit mindestens 2 Hydroxylgruppen oder 2) Zugabe eines Amins welches gegebenenfalls Schutzgruppen aufweist;
(ii) Initiieren einer Polymerisation, indem Ethylenoxid und Glycidol sowie gegebenenfalls weitere substituierte Oxirane in einem vorgegebenen molaren Verhältnis mit dem Initiatorkem umgesetzt werden;
(iii) Terminieren der Polymerisation; und
(iv) Isolation des Copolymers.

Eine weitere Aufgabe der Erfindung besteht darin, hoch-funktionalisierte verzweigte Verbindungen mit einstellbaren, d.h. für eine bestimmte Anwendung angepassten Eigenschaften zu schaffen. Diese Aufgabe wird gelöst durch eine funktionalisierte verzweigte Verbindung, umfassend:
- einen Initiatorkern aus einem 2 bis 100 funktionelle Gruppen aufweisenden Initiator gewählt aus der Gruppe umfassend deprotonierte Alkohole, Amine sowie Amine mit Schutzgruppen;
- lineare Polyethersegmente (K) aus Monomereinheiten (M); und
- Verzweigungsstellen (D),
wobei die Verzweigungsstellen (D) und die Monomereinheiten (M) aus Monomeren gewählt aus der Gruppe umfassend Oxirane, schwefelhaltige Oxirananaloga und stickstoffhaltige Oxirananaloga, gebildet sind und das molare Verhältnis von Verzweigungsstellen (D) und Monomereinheiten (M) zum Initiatorkern (I) im Bereich von 6:1 bis 5000:1 liegt.

Insbesondere umfasst die funktionalisierte verzweigte Verbindung einen Initiatorkern aus einem Initiator mit 2 bis 50, 3 bis 50, 4 bis 30, 4 bis 20 oder 10 bis 15 funktionellen Gruppen. Vorzugsweise sind die Verzweigungsstellen (D) und Monomereinheiten (M) aus den Oxiranen Ethylenoxid und Glycidol gebildet, wobei die molaren Anteilen von Ethylenoxid 0,5 bis 97% und von Glycidol 3 bis 99,5%, bezogen auf die Gesamtheit der Verzweigungsstellen (D) und Monomereinheiten (M), betragen.

Insbesondere sind die Verzweigungsstellen (D) und Monomereinheiten (M) aus mindestens einem Monomer gewählt aus der Gruppe umfassend Propylenoxid (1,2-Epoxypropan), 1,2-Epoxybutan (Ethyloxiran), Allylglycidylether (1-Allyloxy-2,3-Epoxypropan), Benzylglycidylether (Benzyloxymethyloxiran), *tert*-Butylglycidylether (*tert-*Butoxymethyloxiran), Ethoxyethylglycidylether, Styroloxid (2-Phenyloxiran), Aziridin (Ethylenimin) und Thiiran (Ethylensulfid), gebildet.

Weitere erfindungsgemäße Ausführungsformen der Verbindung sind dadurch gekennzeichnet, dass:
- sie 5 bis 1000 funktionelle OH-Gruppen aufweist;
- sie ein Molekulargewicht von 400 bis 100,000 g/mol, vorzugsweise von 10,000 bis 30,000 g/mol hat;
- sie eine Polydispersität M̅_{w}/M̅ₙ von 1 bis 10, vorzugsweise von 1 bis 3 und insbesondere 1,3 bis 2,3 aufweist;
- das Verhältnis (N_{D}/N_{M}) der Anzahl (N_{D}) von Verzweigungsstellen (D) zur Anzahl (N_{M}) der Monomereinheiten (M) im Bereich von 1:100 bis 80:100, vorzugsweise 10:100 bis 60:100 und insbesondere 10:100 bis 20:100 liegt; und
- mindestens zwei Dendriten an den Initiatorkern gebunden sind, wobei die Dendriten aus linearen Polyethersegmenten (K) aus Monomereinheiten (M) und Verzweigungsstellen (D) bestehen.

Bei den erfindungsgemäßen Verbindungen handelt es sich insbesondere um makromolekulare, nicht-vemetzte, nicht-lineare bPEGs, die zahlreiche Hydroxylgruppen oder andere Endgruppen mit spezifischen elektrophilen Teilgruppen sowie einen ebenfalls funktionalisierten Initiatorkern umfassen.

Die Erfindung stellt bPEG Materialien zur Verfügung, deren Eigenschaften wie generelle chemische Zusammensetzung, Molekulargewicht, Polydispersität, chemische Zusammensetzung und Funktionalisierung des Initiatorkerns, Gesamtzahl der funktionellen Gruppen, Verzweigungsgrad und chemische Zusammensetzung der Endgruppen in einem weiten Bereich gezielt anpassbar sind.

Die erfindungsgemäßen bPEGs sind vorzugsweise nach einem Verfahren gemäß den Ansprüchen 1 bis 15 hergestellt.

Im Weiteren schafft die Erfindung ein Verfahren zur Modifikation von hoch-funktionalisierten verzweigten Verbindungen wie bPEG durch Veresterung, Veretherung, Urethanbildung und Silylierung.

Die Erfindung wird nachfolgend anhand von Zeichnungen und Beispielen näher erläutert. Es zeigen:
- Fig. 1: eine schematische Darstellung der Struktur der erfindungsgemäßen Verbindungen;
- Fig. 2: Beispiele von Oxiranen, die zur Herstellung der erfindungsgemäßen Verbindungen verwendet werden;
- Fig. 3: die Struktur eines mittels der Oxirane Ethylenoxid und Glycidol erzeugten bPEG;

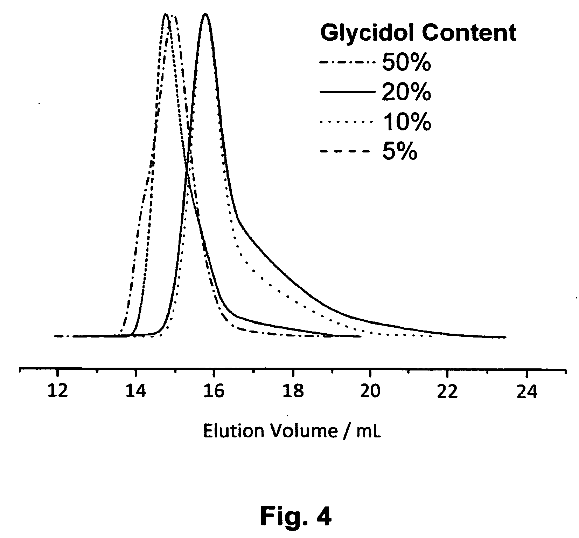

- Fig. 4: Elutionsprofile von bPEGs in Abhängigkeit des Glycidolgehalts; und
- Fig. 5: ein NMR-Spektrum eines erfindungsgemäßen bPEG.

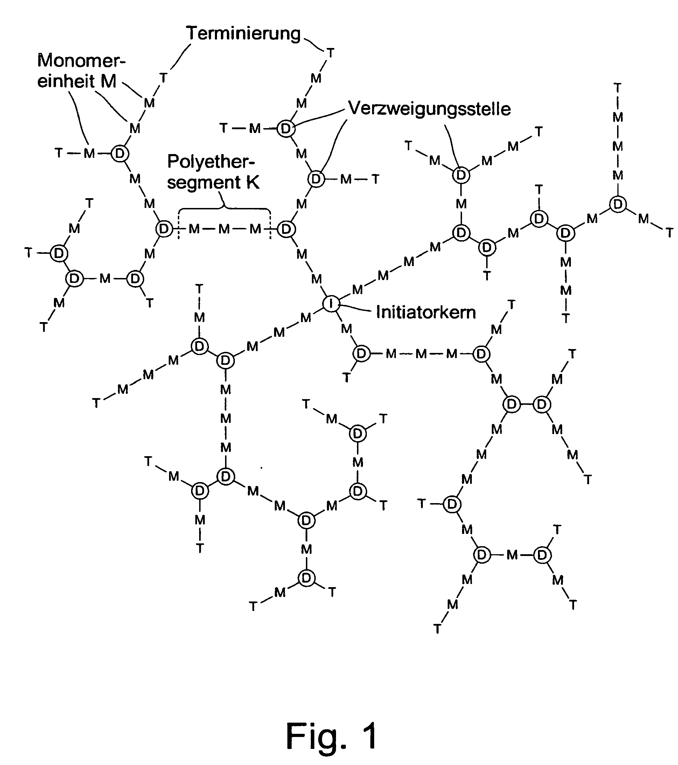

Fig. 1 zeigt eine schematische Darstellung einer erfindungsgemäßen Verbindung mit einem Initiatorkern I, linearen Polyethersegmenten K aus Monomereinheiten M und Verzweigungsstellen D. Die Polyethersegmente K und sowie einige der Verzweigungsstellen D weisen terminale Gruppen T auf. An den Initiatorkern können 2 bis 100, 2 bis 50, 3 bis 50, 4 bis 30, 4 bis 20 oder 10 bis 15 Dendriten gebunden sein, wobei jeder Dendrit aus linearen Polyethersegmenten K aus Monomereinheiten M und Verzweigungsstellen D besteht und eine mehr oder minder verzeigte Struktur aufweist.

Für die Herstellung der erfindungsgemäßen verzweigten Verbindungen kommen als Initiator verschiedenste Alkohole oder Amine mit 2 bis 100, 2 bis 50, 3 bis 50, 4 bis 30, 4 bis 20 oder 10 bis 15 funktionellen Hydroxyl- oder Amino-Gruppen in Betracht. Beispielsweise eignen sich als Initiator Stoffe wie Pentaerythritol, Sorbitol, Glycerin, Trimethylolpropan, Di(benzyl)aminalkohole, kommerzielle Polyglycerine wie Diglycerol®, Polyglycerol-3® und Polyglycerol-4®, kommerzielle Polyetherpolyole wie Arcol®, Desmpophen®, Hyperlite®, Baygal® oder Ultracell® sowie eine Vielzahl von Aminen mit und ohne Schutzgruppen.

Die Deprotonierung der als Initiator eingesetzten Alkohole erfolgt mittels starker Basen. Als Basen eignen sich Alkalimetalle, insbesondere Natrium, Kalium und Cäsium; Hydroxide wie Natrium-, Kalium- und Cäsiumhydroxid; Alkalimetallhydride, wie Kaliumhydrid, Alkoxide wie Natriummethylat, Kaliummethylat, Natriumethoxid oder Kalium-*tert*-butylat, Natriumnaphthalid, Kaliumnaphthalid, Diphenylmethyl-Natrium oder Diphenylmethyl-Kalium.

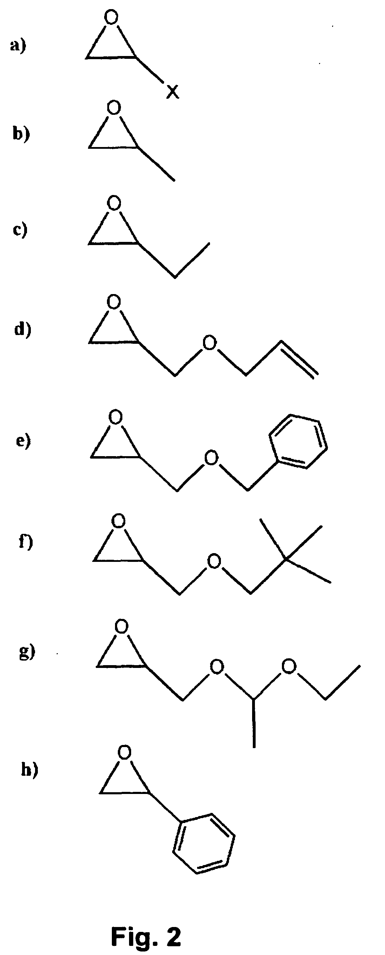

Die Polymerisation wird ausgeführt, indem der Initiator - ggf. nach Deprotonierung - mit mindestens zwei Monomeren umgesetzt wird. Erfindungsgemäß sind die mindestens zwei Monomere gewählt aus der Gruppe umfassend substituierte und nicht-substituierte Oxirane und schwefel- oder stickstoffhaltige Oxirananaloga. Vorzugsweise werden die Oxirane Ethylenoxid und Glycidol verwendet. Optional wird ein weiteres substituiertes Oxiran eingesetzt, das eine Gruppe X aufweist (siehe Fig. 2a), die der Verbindung weitere orthogonale Funktionalitäten verleiht und/oder deren Löslichkeit und thermische Eigenschaften modifiziert. Fig. 2 zeigt Beispiele von Oxiranen, die erfindungsgemäß eingesetzt werden, wobei die Buchstaben (b) bis (h) die folgenden Oxirane bezeichnen:
(b) Propylenoxid (1,2-Epoxypropan),
(c) 1,2-Epoxybutan (Ethyloxiran),
(d) Allylglycidylether (1-Allyloxy-2,3-Epoxypropan),
(e) Benzylglycidylether (Benzyloxymethyloxiran),
(f) *tert*-Butylglycidylether (*tert*-Butoxymethyloxiran),
(g) Ethoxyethylglycidylether, und
(h) Styroloxid (2-Phenyloxiran).

Neben den vorstehenden substituierten Oxiranen kommen schwefel- oder stickstoffhaltige Oxirananaloga wie Aziridin (Ethylenimin) und Thiiran (Ethylensulfid) in Betracht.

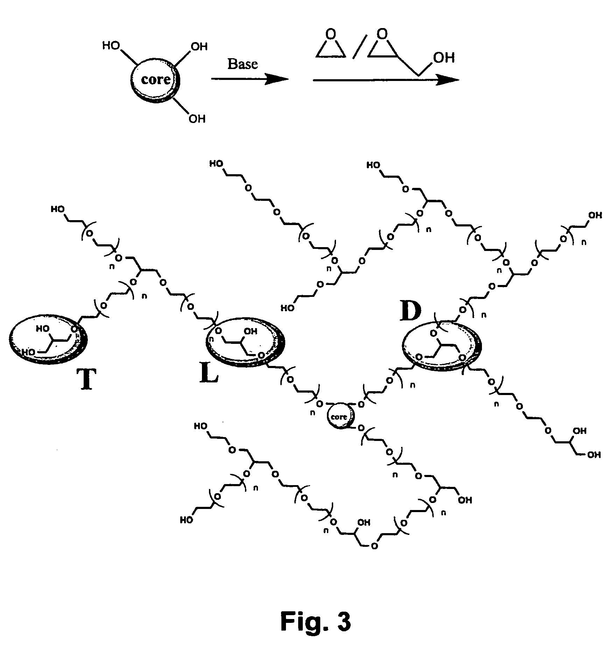

In Fig. 3 sind die Herstellung und generelle Struktur eines erfindungsgemäßen bPEG wiedergegeben. Das bPEG-Molekül beinhaltet einen Initiatorkem ("core") und Ethylenglykol- und Glyceroleinheiten. Die verschiedenen strukturellen Bausteine sind hervorgehoben und mit den Buchstaben "D" für eine verzweigte Glyceroleinheit, "L" für eine lineare bzw. unverzweigte Glyceroleinheit und "T" für eine terminierende Glyceroleinheit bezeichnet.

Wenn, wie im Fall der in Fig. 3 gezeigten Verbindung bei der Herstellung Glycidol verwendet wird, so bilden sich beim Öffnen der C₂H₄O-Ringe und beim Einbau der Glyceroleinheit sekundäre Alkoxide, die durch intra- oder intermolekularen Protonentransfer in primäre Alkoxide übergehen können. Wenn beide Alkoxide der Glyceroleinheit im Verlauf der Polymerisation propagieren, entsteht eine Verzweigungsstelle D. Im Fall, dass lediglich ein Alkoxid einer Glyceroleinheit mit einem anderen Monomer wie Ethylenoxid reagiert, wird eine lineare Einheit L gebildet. Terminierende Einheiten T entstehen, wenn keines der beiden Alkoxide einer Glyceroleinheit bei Beendigung der Polymerisation durch Zugabe eines protischen Reagenz wie Methanol oder Wasser reagiert hat.

Im Fall, dass ein Alkohol als Initiator eingesetzt wird, wird dieser deprotoniert, indem Protonen der Alkoholgruppe entfernt werden. Der Grad der Deprotonierung der Hydroxylgruppen wird von 5 bis 100 % variiert. Soweit bei der Deprotonierung eine protische Verbindung entsteht, wie z.B. Methanol bei der Verwendung von Methylaten als Base, kann diese durch Anlegen eines Unterdruckes vor dem Beginn der Polymerisation entfernt werden.

Die Zusammensetzung der Copolymere bzw. Polymere wird eingestellt, indem das Verhältnis der mindestens zwei Monomere angepasst wird. Beispielsweise wird Ethylenoxid in einem vorgegebenen Mengenanteil zwischen 0,5 und 97 mol-%, bezogen auf die Gesamtheit an Monomeren, zugegeben. Je höher der Anteil an Ethylenoxid relativ zu Glycidol und gegebenenfalls einem weiteren Monomer ist, desto längere lineare PEG-Ketten enthält das Polymer. Vorzugsweise wird dem Reaktionsgefäß, das einen mittels Destillation getrockneten und unter Vakuum kondensierten Initiator enthält, Ethylenoxid zugeführt. Glycidol und gegebenenfalls eines oder mehrere der vorstehend genannten Monomere, insbesondere jene in Fig. 2 b) bis h) wiedergegebenen, werden vor oder nach dem Ethylenoxid zugefügt.

Das Molekulargewicht der Polymere wird durch das molare Verhältnis der Monomere relativ zum Initiator eingestellt. Näherungsweise hängt die Anzahl der funktionellen Hydroxylgruppen n(OH) je Polymermolekül von dem Anteil der eingebauten Glycidol-Einheiten und der Funktionalisierung des Initiatorkerns ab, weil sowohl die Glycidol-Einheiten wie auch der Initiatorkern Hydroxylgruppen beitragen. Diese Näherung trifft nur dann zu, wenn die Homopolymerisation ohne die Aufnahme des Iniatorkerns vernachlässigbar ist. Erfindungsgemäß beträgt die Anzahl der Hydroxylgruppen n(OH) je Polymermolekül zwischen 5 und 1000. Um die Polymerisation zu beenden und das gewünschte bPEG zu erhalten, wird ein protisches Reagenz zugeführt.

Die Größe der erfindungsgemäß hergestellten Polymere wird mittels Gelpermeationschromatographie (GPC) analysiert. Hierbei zeigt sich, dass der Anteil an niedermolekularen Polymeren kleiner als 5 mol-% ist. Dieser niedermolekulare Anteil kann mittels Fällung oder Dialyse leicht entfernt werden.

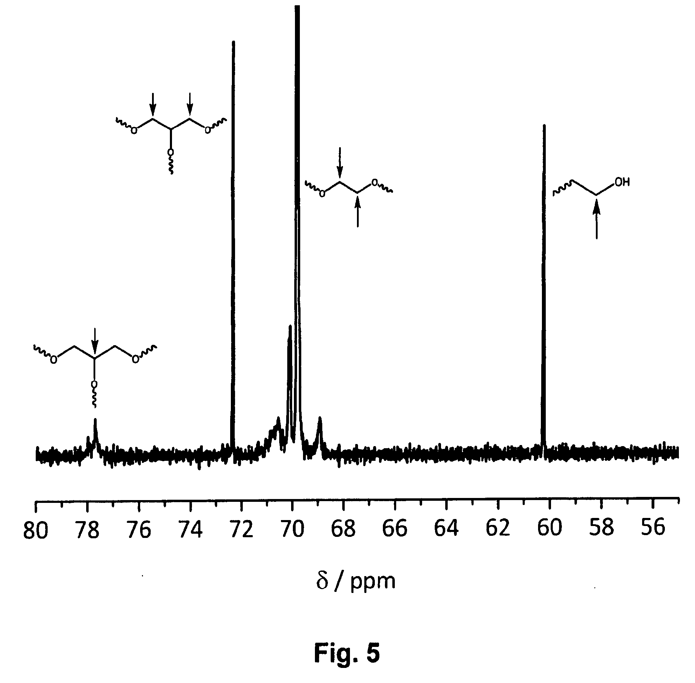

Fig. 5 zeigt die nach Abtrennung der niedermolekularen Polymere mittels Größen-Ausschluss-Chromatographie erhaltenen GPC-Elugramme von vier erfindungsgemäß hergestellten Polymeren mit unterschiedlichen Anteilen von Ethylenglykol- und Glycidol-Einheiten.

Die Molekulargewichte der erhaltenen bPEGs liegen bevorzugt in einem Bereich zwischen 400 und 100,000 g/mol. Die Streuung der Molekulargewichte (Polydispersität M̅_{w}/M̅ₙ) ist gering und liegt in einem Bereich von 1 bis 3 und insbesondere von 1,3 bis 2,3; vereinzelt werden größere Werte von bis zu 10 beobachtet.

Die statistische Verzweigungsstruktur der erhaltenen Polymere wird mittels Kemspinresonanz-Spektroskopie (NMR) analysiert. Im Fall von Poly(ethylenoxid)-co-(glycidol) können mittels ¹H-NMR-Spektroskopie die Wasserstoffatome nach ihrer chemischen Bindung unterschieden werden. Die quantitative Auswertung der ¹H-NMR-Spektren gestattet es, die relative Anzahl verschiedener Wasserstoff enthaltender Gruppen zu ermitteln. Hierzu werden die Intensitäten bzw. Flächen der bei charakteristischen Frequenzen (bzw. Frequenzverschiebungen) auftretenden Resonanzlinien (bzw. Resonanzpeaks) integriert und miteinander verglichen. Üblicherweise erfolgt die Integration softwaregestützt numerisch, ggf. anhand einer durch nichtlineare Regression an die gemessenen Resonanzlinie angepassten Modellfunktion (non-linear least squares fit). Anhand der Peakintensitäten der ¹H-NMR-Spektren können verschiedene Verhältnisse sowie das Molekulargewicht bestimmt werden: (i) Anzahl der in OH-Gruppen der Glycidol-Einheiten vorliegenden Wasserstoffatome relativ zur Anzahl des im Initiatorkern vorliegenden Wasserstoffs; (ii) Anzahl der Wasserstoffatome in Ethylenoxid-Einheiten, indem von dem Signal der Wiederholungseinheiten das Wasserstoffsignal der Glycidol-Einheiten subtrahiert wird; und (iii) Addition der Molekularmasse des Initiatorkerns und der entsprechenden Monomereinheiten. Die anhand der Methode (iii) bestimmten Molekulargewichte stimmen gut überein mit den durch GPC erhaltenen Werten.

Im Weiteren wurde die molekulare Struktur der erfindungsgemäßen Polymere mittels "inverse gated" ¹³C-NMR-Spektroskopie ermittelt. Die ¹³C-NMR-Spektroskopie gestattet es, Details der in einem Molekül vorhandenen Monomereinheiten zu ermitteln. In Fig. 5 ist ein Ausschnitt eines an einem erfindungsgemäßen bPEG gemessenen ¹³C-NMR-Spektrums wiedergegegeben. Die neben den Resonanzlinien dargestellten Symbole zeigen an, von welchem Kohlenstoffatom bzw. von welcher Struktureinheit das Resonanzsignal herrührt. Durch Integration der verschiedenen Resonanzlinien kann die Anzahl der Monomereinheiten pro Molekül bestimmt werden.

Die charakteristischen Parameter einiger erfindungsgemäßer bPEG, umfassend einen Initatorkern, Ethylenglykol- und Glycidol-Einheiten, sind in Tabelle 1 wiedergegeben.

**Tabelle 1**

| **Glycidol** | **Glycidol** | **Glycidol** | **Molekulargewicht** | **Polydispersität** |
|---|---|---|---|---|
| % | % | % | g/mol | - |
| (berechnet*) | (¹H NMR) | (¹³C NMR) | (SEC) | (SEC) |
| **50** | 45.1 | 37.1 | 38000 | 1.34 |
| **20** | 14.5 | 13.8 | 16000 | 1.81 |
| **15** | 12.2 | 11.3 | 29000 | 1.76 |
| **12** | 11.4 | 9.5 | 27000 | 1.38 |
| **10** | 8.8 | 8.7 | 39000 | 1.36 |
| **5** | 6.6 | 4.6 | 27000 | 1.34 |
| **3** | 3.9 | 3.8 | 17000 | 1.41 |

| | | | | |
|---|---|---|---|---|
| * berechnet anhand der zur Reaktion eingesetzten Menge an Glycidol | | | | |

Die Löslichkeit der erfindungsgemäßen bPEG wird wesentlich durch das Verhältnis der Comonomere bestimmt. Sämtliche bPEG sind in Wasser, niedermolekularen Alkoholen und stark polaren aprotischen Lösungsmitteln wie Dimethylformamid (DMF) oder Dimethylsulfoxid (DMSO) löslich. Je größer der relative Anteil an Ethylenglykol-Einheiten ist, desto besser ist die Löslichkeit in hydrophoben Lösungsmitteln wie Chloroform. Alle Polymere mit einem PEG-Anteil von größer 5 mol% kristallisieren bei Raumtemperatur nicht. Die Polymere liegen bei Raumtemperatur in verschiedener Form vor, beispielsweise als klare viskose Flüssigkeit oder als wachsartige Substanz.

Die thermischen Eigenschaften der erfindungsgemäßen hoch-funktionalisierten bPEG können über die relativen Mengenanteile der Copolymere eingestellt werden. Die Glasübergangstemperatur der bPEG liegt in der Regel unterhalb von - 50 °C. Die Schmelzenthalpie der bPEG ist eine Funktion des PEG-Anteils.

**Tabelle 2**

| **Glycidol** | **Tg** | **Tm** | **Schmelzenthalpie** |
|---|---|---|---|
| % | **°C**** | **°C**** | **J/g**** |
| (berechnet*) | | | |
| **50** | -60.1 | - | - |
| **20** | -62.0 | - 20.8 | 9.2 |
| **12** | -61.0 | 4.8 | 35.2 |
| **10** | -58.7 | 6.7 | 49.3 |
| **5** | -57.7 | 18.4 | 69.8 |
| **3** | -60.0 | 33.3 | 102.1 |

| | | | |
|---|---|---|---|
| * berechnet anhand der zur Reaktion eingesetzten Menge an Glycidol ** Mittels Differential Scanning Calorimetry (DSC) bestimmt | | | |

Im Weiteren betrifft die Erfindung Verfahren zur Modifikation der funktionellen verzweigten Verbindungen gemäß den Ansprüchen 16 bis 23 durch Veresterung oder Silylierung. Diese Modifikationen dienen dazu, die Löslichkeit in apolaren Lösungsmitteln zu erhöhen und/oder die Viskosität einzustellen. Je nach Funktionalisierung sind verschiedene Verwendungen der erfindungsgemäßen Verbindungen vorgesehen. So eignen sich die erfindungsgemäßen Verbindungen zur Herstellung von Sonnenschutzmitteln. Hierzu werden die funktionellen verzweigten Verbindungen mit UV-Absorbern verknüpft. Vorzugsweise werden die funktionellen verzweigten Verbindungen zur Herstellung von Arzneimitteln, Kosmetika, Shampoos, Lotionen und Hygienartikeln verwendet. Zudem ist der Einsatz in technischen Anwendungsgebieten wie der Herstellung von Schmiermitteln, Klebstoffen und synthetischen Fasern vorgesehen.

Im Folgenden werden beispielhafte Syntheseverfahren zur Herstellung der erfindungsgemäßen Verbindungen wiedergegeben.

### Beispiel 1

Herstellung von bPEG mit 3 % Glycidol und Trimethylolpropan als Initiator

Ein Reaktionsgefäß aus Glas mit zwei Stutzen, Septum, Teflonhahn und einem Magnetrührer wird an eine Vakuumpumpe angeschlossen und evakuiert. 0,134 g (1 mmol) Trimethylolpropan wird in das Reaktionsgefäß gegeben und in 5 ml Benzen suspendiert. Nach 30-minütigem Rühren der Suspension, wir das Reaktionsgefäß mindestens 3 Stunden lang unter Vakuum gehalten, um sämtliche Spuren von Wasser und anderen leicht flüchtigen Substanzen azeotrop zu entfernen. Dann wird das Reaktionsgefäß mit Argon gefüllt, dem Trimethylolpropan 30 ml frisch destillierter Diethylenglycoldimethylether (Diglyme) zugefügt, um Trimethylolpropan aufzulösen und tropfenweise frisch zubereitetes Kaliumnaphthalid in Form von 1,03 ml einer 0,29 M Tetrahydrofuran-Lösung unter ständigem Rühren zugeführt. Anschließend wird die Initiatorlösung für 1 h bei Raumtemperatur gerührt. Die erhaltene Initiatorlösung wird auf eine Temperatur von -80 °C gekühlt und das Reaktionsgefäß evakuiert. 7 ml Ethylenoxid, entsprechend 140 mmol, werden in einer Ampulle über Calciumhydrid getrocknet und unter Vakuum in das Reaktionsgefäß überführt. Das Reaktionsgefäß wird versiegelt und 0,3 ml, entsprechend 4,5 mmol, frisch destilliertes Glycidol werden über eine Spritze durch das Septum zugegeben. Das Reaktionsgemisch wird auf eine Temperatur von 80 °C erhitzt und über einen Zeitraum von 18 h gerührt. Nach Zugabe einer Überschussmenge an Methanol wird das Reaktionsgemisch über einen Zeitraum von 3 Tagen gegen Methanol oder Wasser dialysiert. Abschließend wird Methanol oder Wasser über einen Zeitraum von 24 h unter Vakuum bei einer Temperatur von 60 °C entfernt, um das erfindungsgemäße Polymer mit einer Ausbeute von 80 bis 90 % des Reaktionsgemisches zu erhalten.

### Beispiel 2

Herstellung von bPEG mit 3% Glycidol und N,N-di(benzyl)amino-1,3-propandiol als Initiator

Ein Reaktionsgefäß aus Glas mit zwei Stutzen, Septum, Teflonhahn und einem Magnetrührer wird an eine Vakuumpumpe angeschlossen und evakuiert. 0,271 g (1 mmol) *N,N* di(benzyl)amino-1,3-propandiol wird in das Reaktionsgefäß überführt und in 5 ml anhydriertem Benzol gelöst. Das Reaktionsgefäß wird evakuiert und mindestens 3 Stunden lang unter Vakuum gehalten, um sämtliche Spuren von Wasser und anderen leicht flüchtigen Substanzen zu entfernen. Dann wird das Reaktionsgefäß mit Argon gefüllt, dem Initiator 30 ml frisch destillierter Diethylenglycoldimethylether (Diglyme) zugefügt, um das N,N-di(benzyl)amino-1,3-propandiol aufzulösen und tropfenweise frisch zubereitetes Kaliumnaphthalid in Form von 0,7 ml einer 0,29 M Tetrahydrofuran-Lösung unter ständigem Rühren zugeführt. Anschließend wird die Initiatorlösung für 1 h bei Raumtemperatur gerührt. Die erhaltene Initiatorlösung wird auf eine Temperatur von -80 °C gekühlt und das Reaktionsgefäß evakuiert. 7 ml Ethylenoxid, entsprechend 140 mmol, werden in einer Ampulle über Calciumhydrid getrocknet und unter Vakuum in das Reaktionsgefäß überführt. Das Reaktionsgefäß wird versiegelt und 0,3 ml, entsprechend 4,5 mmol, frisch destilliertes Glycidol werden über eine Spritze durch das Septum zugegeben. Das Reaktionsgemisch wird auf eine Temperatur von 80 °C erhitzt und über einen Zeitraum von 18 h gerührt. Nach Zugabe einer Überschussmenge an Methanol wird die Lösung mit einem Kationentauscherharz (Dowex 50WX8) neutralisiert und bei Raumtemperatur eine Stunde lang gerührt. Sämtliche Lösungsmittel werden unter Niederdruck entfernt und das Reaktionsgemisch in 10 ml Methanol gelöst. Nach Fällung in kaltem Diethylether und Trocknung unter Vakuum bei einer Temperatur von 60 °C über einen Zeitraum von 24 h wird ein wachsartiges Polymer in einer Ausbeute von 80 bis 90 % des Reaktionsgemisches erhalten.

### Beispiel 3

Herstellung von bPEG mit 10 % Glycidol und N,N-di(benzyl)amino-1,3-propandiol als Initiator

Ein Reaktionsgefäß aus Glas mit zwei Stutzen, Septum, Teflonhahn und einem Magnetrührer wird an eine Vakuumpumpe angeschlossen und evakuiert. 0,271 g (1 mmol) *N,N* di(benzyl)amino-1,3-propandiol wird in das Reaktionsgefäß überführt und in 5 ml anhydriertem Benzen gelöst. Das Reaktionsgefäß wird evakuiert und mindestens 3 Stunden lang unter Vakuum gehalten, um sämtliche Spuren von Wasser und anderen leicht flüchtigen Substanzen zu entfernen. Dann wird das Reaktionsgefäß mit Argon gefüllt, dem Initiator 30 ml frisch destillierter Diethylenglycoldimethylether (Diglyme) zugefügt, um das N,N-di(benzyl)amino-1,3-propandiol aufzulösen, und tropfenweise frisch zubereitetes Kaliumnaphthalid in Form von 0,7 ml einer 0,29 M Tetrahydrofuran-Lösung unter ständigem Rühren zugeführt. Anschließend wird die Initiatorlösung für 1 h bei Raumtemperatur gerührt. Die erhaltene Initiatorlösung wird auf eine Temperatur von -80 °C gekühlt und das Reaktionsgefäß evakuiert. 7 ml Ethylenoxid, entsprechend 140 mmol, werden in einer Ampulle über Calciumhydrid getrocknet und unter Vakuum in das Reaktionsgefäß überführt. Das Reaktionsgefäß wird versiegelt und 1 ml, entsprechend 15 mmol, frisch destilliertes Glycidol werden über eine Spritze durch das Septum zugegeben. Das Reaktionsgemisch wird auf eine Temperatur von 80 °C erhitzt und über einen Zeitraum von 18 h gerührt. Nach Zugabe einer Überschussmenge an Methanol wird die Lösung mit einem Kationentauscherharz (Dowex 50WX8) neutralisiert und bei Raumtemperatur eine Stunde lang gerührt. Sämtliche Lösungsmittel werden unter Niederdruck entfernt und das Reaktionsgemisch in 10 ml Methanol gelöst. Nach Fällung in kaltem Diethylether und Trocknung unter Vakuum bei einer Temperatur von 60 °C über einen Zeitraum von 24 h wird ein klares und viskoses Polymer in einer Ausbeute von 80 bis 90 % des Reaktionsgemisches erhalten.

## Patentansprüche

1. Verfahren zur Herstellung von funktionellen verzweigten Verbindungen gemäß Anspruch 13, umfassend die Schritte:
(a) Mischen von zwei oder mehreren Monomeren gewählt aus der Gruppe umfassend Oxirane, schwefelhaltige Oxirananaloga und stickstoffhaltige Oxirananaloga mit einem oder mehreren Initiatoren (I) gewählt aus der Gruppe umfassend deprotonlerte Alkohole, Amine sowie Amine mit Schutzgruppen, wobei der/die Initiatoren (I) 2 bis 100 funktionelle Gruppen aufweisen und das molare Verhältnis der Monomere zu dem/den Initiatoren (I) im Bereich von 6:1 bis 5000:1 liegt;
(b) Initiieren einer anionischen ring-öffnenden Polymerisation; und
(c) Terminieren der Polymerisation durch Zuführen eines protischen Reagenz.

2. Verfahren nach Anspruch 1, **dadurch gekennzeichnet, dass** in Schritt (a) die Oxirane Ethylenoxid und Glycidol mit molaren Anteilen von 0,5 bis 97 % beziehungsweise von 3 bis 99%, bezogen auf die Gesamtheit der Monomeren, eingesetzt werden.

3. Verfahren nach Anspruch 1 oder 2, **dadurch gekennzeichnet, dass** in Schritt (a) mindestens ein Monomer gewählt aus der Gruppe umfassend Propylenoxid (1,2-Epoxypropan), 1,2-Epoxybutan (Ethyloxiran), Allylglycidylether (1-Allyloxy-2,3-Epoxypropan), Benzylglycidylether (Benzyloxymethyloxiran), *tert*-Butylglycidylother (*tert-*Butoxymethyloxiran), Ethoxyethylglycidylether, Styroloxid (Phenyloxiran), Aziridin (Ethylenimin) und Thiiran (Ethylensulfid) eingesetzt wird, wobei der molare Anteil des mindestens einen aus der Gruppe gewählten Monomers 1 bis 30%, bezogen auf die Gesamtheit der Monomeren, beträgt.

4. Verfahren nach einem oder mehreren der Ansprüche 1 bis 3, **dadurch gekennzeichnet, dass** in Schritt (a) als Initiator (I) ein Alkohol mit 2 bis 100 funktionellen Gruppen eingesetzt wird, wobei 5 bis 30 % der funktionellen Gruppen deprotoniert sind oder dass in Schritt (a) ein Amin als Initiator (I) eingesetzt wird.

5. Verfahren nach einem oder mehreren der Ansprüche 1 bis 4, **dadurch gekennzeichnet, dass** in Schritt (a) zum Deprotonieren des Initiators (I) ein Mittel gewählt aus der Gruppe umfassend Alkali-Naphthalide, Diphenylmethyl-Alkalimetalle, Alkalimetalle, Hydroxide, Alkoxide sowie Mischungen davon, eingesetzt wird.

6. Verfahren nach einem oder mehreren der Ansprüche 1 bis 5, **dadurch gekennzeichnet, dass** flüchtige Nebenprodukte der Deprotonierung aus der Reaktionsmischung entfernt werden.

7. Verfahren nach einem oder mehreren der Ansprüche 1 bis 6, **dadurch gekennzeichnet, dass** es in einer Niederdruckatmosphäre von 0,0001 bis 0,95 bar oder in einer Hochdruckatmosphäre von 1,1 bis 40 bar ausgeführt wird.

8. Verfahren nach einem oder mehreren der Ansprüche 1 bis 7, **dadurch gekennzeichnet, dass** es bei einer Temperatur von 40 bis 150 °C ausgeführt wird.

9. Verfahren nach einem oder mehreren der Ansprüche 1 bis 8, **dadurch gekennzeichnet, dass** in Schritt (a) eines oder mehrere der Monomere kontinuierlich zugeführt wird (werden).

10. Verfahren nach einem oder mehreren der Ansprüche 1 bis 9, **dadurch gekennzeichnet, dass** in Schritt (c) ein Alkohol oder Wasser verwendet wird, um die Polymerisation zu terminieren.

11. Verfahren nach einem oder mehreren der Ansprüche 1 bis 10, **dadurch gekennzeichnet, dass** es einen weiteren Schritt (d) umfasst, in dem die in Schritt (c) erhaltene Verbindung mit einem funktionalisierenden Reagenz umgesetzt wird, wobei das Reagenz mit OH-Gruppen der besagten Verbindung reagiert.

12. Verfahren nach einem oder mehreren der Ansprüche 1 bis 11, **dadurch gekennzeichnet, dass** in Schritt (c) dem Reaktionsgemisch weitere Verbindungen mit von OH verschiedenen funktionellen Gruppen, insbesondere mit Amino-, Carbonsäure-, Carbonyl-, Sulfonsäure- und Aldehyd-Gruppen, zugefügt werden.

13. Funktionelle verzweigte Verbindung, umfassend
- einen Initiatorkern (I) aus einem 2 bis 100 funktionelle Gruppen aufweisenden Initiator gewählt aus der Gruppe umfassend deprotonierte Alkohole, Amine sowie Amine mit Schutzgruppen;
- lineare Polyethersegmente (K) aus Monomereinheiten (M); und
- Verzweigungsstellen (D);
wobei die Verzweigungsstellen (D) und die Monomereinheiten (M) aus Monomeren gewählt aus der Gruppe umfassend Oxirane, schwefelhaltige Oxirananaloga und stickstoffhaltige Oxirananaloga, gebildet sind und das molare Verhältnis von Verzweigungsstellen (D) und Monomereinheiten (M) zum Initiatorkern (I) im Bereich von 6:1 bis 5000:1 liegt, die Verbindung Verzweigungsstellen (D) und Monomereinheiten (M) der Oxirane Ethylenoxid und Glycidol mit molaren Anteilen von 0,5 bis 97 % bzw. 3 bis 99,5 %, bezogen auf die Gesamtheit der Verzweigungsstellen (D) und Monomereinheiten (M) umfasst, das Verhältnis (N_{D}/N_{M}) der Anzahl (N_{D}) von Verzweigungsstellen (D) zur Anzahl (N_{M}) der Monomereinheiten (M) im Bereich von 10:100 bis 60:100 liegt, die Verbindung eine Polydispersität M̅_{w}/M̅ₙ von 1 bis 3 aufweist und durch ein Verfahren nach den Ansprüchen 1 bis 12 erhältlich ist.

14. Verbindung nach Anspruch 13, **dadurch gekennzeichnet, dass** sie Verzweigungsstellen (D) und Monomereinheiten (M) aus mindestens einem Monomer gewählt aus der Gruppe umfassend Propylenoxid (1,2-Epoxypropan), 1,2-Epoxybutan (Ethyloxiran), Allylglycidylether (1-Allyloxy-2,3-Epoxypropan), Benzylglycidylether (Benzyloxy-methyloxiran), *tert*-Butylglycidylether (*tert*-Butoxymethyloxiran), Ethoxyethylglycidylether, Styroloxid (Phenyloxiran), Aziridin (Ethylenimin) und Thüran (Ethylensulfid), umfasst.

15. Verbindung nach Anspruch 13 oder 14, **dadurch gekennzeichnet, dass** sie 5 bis 1000 funktionelle OH-Gruppen aufweist.

16. Verbindung nach einem oder mehreren der Ansprüche 13 bis 15, **dadurch gekennzeichnet, dass** sie ein Molekulargewicht von 400 bis 1.00,000 g/mol, vorzugsweise von 10,000 bis 30,000 g/mol und eine Polydispersität M̅_{w}/M̅ₙ von 1,3 bis 2,3 aufweist und das Verhältnis (N_{D}/N_{M}) der Anzahl (N_{D}) von Verzweigungsstellen (D) zur Anzahl (N_{M}) der Monomereinheiten (M) im Bereich von 10:100 bis 20:100 liegt.

## Claims

1. A method for the production of functional branched compounds according to claim 13 comprising the steps:
(a) Mixing of two or more monomers chosen from the group comprising oxiranes, sulfur-containing oxirane analogs and nitrogen-containing oxirane analogs with one or more initiators (I) chosen from the group comprising deprotonated alcohols, amines and amines having protective groups, wherein the initiator(s) (I) have 2 to 100 functional groups and the molar ratio of the monomers to the initiator(s) (I) lies in the range from 6:1 to 5000:1;
(b) Initiation of an anionic ring-opening polymerization; and
c) Termination of the polymerization by introducing a protic reagent.

2. The method as claimed in claim 1, **characterized in that** in step (a) the oxiranes ethylene oxide and glycidol with molar fractions of 0.5 to 97 % or of 3 to 99 %, based on the totality of the monomers, are employed.

3. The method as claimed in claim 1 or 2, **characterized in that** in step (a) at least one monomer chosen from the group comprising propylene oxide (1,2-epoxypropane), 1,2-epoxybutane (ethyloxirane), allyl glycidyl ether (1-allyloxy-2,3-, epoxypropane), benzyl glycidyl ether (benzyloxymethyloxirane), *tert*-butyl glycidyl ether (*tert*-butoxymethyloxirane), ethoxyethyl glycidyl ether, styrene oxide (phenyloxirane), aziridine (ethyleneimine) and thiirane (ethylene sulfide) is employed, wherein the molar fraction of the at least one monomer chosen from the group is 1 to 30 %, based on the totality of the monomers.

4. The method as claimed in one or more of claims 1 to 3, **characterized in that** in step (a) an alcohol having 2 to 100 functional groups is employed as initiator (I), wherein 5 to 30 % of the functional groups are deprotonated or that in step (a) an amine is employed as initiator (I).

5. The method as claimed in one or more of claims 1 to 4, **characterized in that** in step (a) an agent chosen from the group comprising alkali metal naphthalides, diphenylmethyl alkali metals, alkali metals, hydroxides, alkoxides and mixtures thereof is employed for deprotonating the initiator (I).

6. The method as claimed in one or more of claims 1 to 5, **characterized in that** volatile byproducts of the deprotonation are removed from the reaction mixture.

7. The method as claimed in one or more of claims 1 to 6, **characterized in that** it is carried out in a low-pressure atmosphere of 0.0001 to 0.95 bar or in a high-pressure atmosphere of 1.1 to 40 bar.

8. The method as claimed in one or more of claims 1 to 7, **characterized in that** it is carried out at a temperature of 40 to 150 °C.

9. The method as claimed in one or more of claims 1 to 8, **characterized in that** in step (a) one or more of the monomers is (are) introduced continuously.

10. The method as claimed in one or more of claims 1 to 9, **characterized in that** in step (c) an alcohol or water is used to terminate the polymerization.

11. The method as claimed in one or more of claims 1 to 10, **characterized in that** it comprises a further step (d), in which the compound obtained in step (c) is reacted with a functionalizing reagent, wherein the reagent reacts with OH groups of said compound.

12. The method as claimed in one or more of claims 1 to 11, **characterized in that** in step (c) further compounds having functional groups different from OH, in particular having amino, carboxylic acid, carbonyl, sulfonic acid and aldehyde groups, are added to the reaction mixture.

13. A functional branched compound, comprising
- an initiator core (I) consisting of an initiator having 2 to 100 functional groups chosen from the group comprising deprotonated alcohols, amines and amines having protective groups;
- linear polyether segments (K) consisting of monomer units (M); and
- branching sites (D);
wherein the branching sites (D) and the monomer units (M) are formed from monomers chosen from the group comprising oxiranes, sulfur-containing oxirane analogs and nitrogen-containing oxirane analogs, and the molar ratio of branching sites (D) and monomer units (M) to the initiator core (I) lies in the range from 6:1 to 5000:1, the compound comprises branching sites (D) and monomer units (M) of the oxiranes ethylene oxide and glycidol having molar fractions of 0.5 to 97 % or 3 to 99.5 %, based on the totality of the branching sites (D) and monomer units (M), the ratio (N_{D}/N_{M}) of the number (N_{D}) of branching sites (D) to the number (N_{M}) of monomer units (M) lies in the range from 10:100 to 60:100, the compound has a polydispersity M̅_{w}/M̅ₙ of 1 to 3 and it is obtainable by a method as claimed in claims 1 to 12.

14. The compound as claimed in claim 13, **characterized in that** it comprises branching sites (D) and monomer units (M) of at least one monomer chosen from the group comprising propylene oxide (1,2-epoxypropane), 1,2-epoxybutane (ethyloxirane), allyl glycidyl ether (1-allyloxy-2,3-epoxypropane), benzyl glycidyl ether (benzyloxymethyloxirane), *tert*-butyl glycidyl ether (*tert*-butoxymethyloxirane), ethoxyethyl glycidyl ether, styrene oxide (2-phenyloxirane), aziridine (ethyleneimine) and thiirane (ethylene sulfide).

15. The compound as claimed claim 13 or 14, **characterized in that** it contains 5 to 1000 functional OH groups.

16. The compound as claimed in one or more of claims 13 to 15, **characterized in that** it has a molecular weight of 400 to 100 000 g/mol, preferably of 10 000 to 30 000 g/mol and polydispersity M̅_{w}/M̅ₙ of 1,3 to 2,3, and the ratio (N_{D}/N_{M}) of the number (N_{D}) of branching sites (D) to the number (N_{M}) of the monomer units (M) lies in the range from 10:100 to 20:100.

## Revendications

1. Procédé de production de composés ramifiés fonctionnels selon la revendication 13, comprenant les étapes de :
(a) mélange de deux ou plusieurs monomères choisis dans le groupe comprenant des oxiranes, des analogues d'oxirane contenant du soufre et des analogues d'oxirane contenant de l'azote avec un ou plusieurs initiateurs (I) choisis dans le groupe comprenant des alcools déprotonés, des amines et des amines avec des groupes protecteurs, dans lequel le/les initiateur(s) (I) présentent 2 à 100 groupes fonctionnels et le rapport molaire des monomères au(x) initiateur(s) (I) se situe dans la plage de 6 :1 à 5000 :1 ;
(b) initiation d'une polymérisation anionique par ouverture de cycle ; et
(c) terminaison de la polymérisation par apport d'un réactif protique.

2. Procédé selon la revendication 1, **caractérisé en ce que**, à l'étape (a), on utilise les oxiranes oxyde d'éthylène et glycidol présentant des proportions en moles de 0,5 à 97% ou de 3 à 99% par rapport à la totalité du monomère.

3. Procédé selon la revendication 1 ou 2, **caractérisé en ce que**, à l'étape (a), au moins un monomère choisi dans le groupe comprenant l'oxyde de propylène (1,2-époxypropane) ; le 1,2-époxybutane (éthyloxirane), l'allylglycidyléther (1-allyloxy-2,3-époxypropane), le benzylglycidyléther (benzyloxyméthyloxirane), le tert-butylglycidyléther (tert-butoxyméthoxirane), l'éthoxyéthylglycidyléther, l'oxyde de styrène (phényloxirane), l'aziridine (éthylène-imine) et le thiirane (sulfure d'éthylène) est utilisé, dans lequel la proportion en mole de l'au moins un monomère choisi dans le groupe est de 1 à 30% par rapport à la totalité du monomère.

4. Procédé selon une ou plusieurs des revendications 1 à 3, **caractérisé en ce que**, à l'étape (a), on utilise comme initiateur (I) un alcool comportant 2 à 100 groupes fonctionnels, dans lequel 5 à 30% des groupes fonctionnels sont déprotonés et **en ce que**, à l'étape (a), une amine est utilisée comme initiateur (I).

5. Procédé selon une ou plusieurs des revendications 1 à 4, **caractérisé en ce que**, à l'étape (a), pour la déprotonation de l'initiateur (I), on utilise un moyen choisi dans le groupe comprenant des naphtalures alcalins, des métaux alcalins - diphényl-méthyle, des métaux alcalins, des hydroxydes, des alcoxydes et leurs mélanges.

6. Procédé selon une ou plusieurs des revendications 1 à 5, **caractérisé en ce que** des sous-produits volatils de la déprotonation sont éliminés du mélange réactionnel.

7. Procédé selon une ou plusieurs des revendications 1 à 6, **caractérisé en ce qu'**il est réalisé dans une atmosphère à basse pression de 0,0001 à 0,95 bars ou dans une atmosphère à haute pression de 1,1 à 40 bars.

8. Procédé selon une ou plusieurs des revendications 1 à 7, **caractérisé en ce qu'**il est réalisé à une température de 40 à 150°C.

9. Procédé selon une ou plusieurs des revendications 1 à 8, **caractérisé en ce qu'**à l'étape (a), on effectue un apport en continu d'un ou plusieurs des monomères.

10. Procédé selon une ou plusieurs des revendications 1 à 9, **caractérisé en ce qu'**à l'étape (c), on utilise un alcool ou de l'eau pour mettre fin à la polymérisation.

11. Procédé selon une ou plusieurs des revendications 1 à 10, **caractérisé en ce qu'**il comprend une autre étape (d) dans laquelle on fait réagir le composé obtenu à l'étape (c) avec un réactif fonctionnalisant, le réactif réagissant avec des groupes OH dudit composé.

12. Procédé selon une ou plusieurs des revendications 1 à 11, **caractérisé en ce qu'**à l'étape (c), on ajoute au mélange réactionnel d'autres composés ayant différents groupes fonctionnels OH, en particulier des groupes amino, acide carboxylique, carbonyle, acide sulfonique et aldéhyde.

13. Composé ramifié fonctionnel, comprenant
- un noyau d'initiateur (I) d'un initiateur présentant 2 à 100 groupes fonctionnels choisi dans le groupe comprenant des alcools déprotonés, des amines et des amines ayant des groupes protecteurs ;
- des segments polyéthers linéaires (K) de motifs monomères (M) ; et
- des sites de ramification (D) ;
dans lequel les sites de ramification (D) et les motifs monomères (M) sont formés de monomères choisis dans le groupe comprenant des oxiranes, des analogues d'oxirane contenant du soufre et des analogues d'oxirane contenant de l'azote et le rapport molaire des sites de ramifications (D) et des motifs de monomère (M) au noyau d'initiateur (I) se situe dans la plage de 6 : 1 à 5000 : 1, le composé comprend des sites de ramifications (D) et des motifs de monomère des oxiranes oxyde d'éthylène et glycidol présentant des proportions en mole de 0,5 à 97% ou de 3 à 99,5% par rapport à la totalité des sites de ramifications (D) et des motifs de monomères, le rapport (N_{D}/N_{M}) du nombre (N_{D}) de sites de ramification (D) au nombre (N_{M}) de motifs de monomère (M) se situe dans la plage de 10 : 100 à 60 : 100, le composé présente une polydispersité M̅_{w}/M̅ₙ de 1 à 3 et est obtenu par un procédé selon les revendications 1 à 12.

14. Procédé selon la revendication 13, **caractérisé en ce qu'**il comprend des sites de ramification (D) et des motifs de monomère (M) d'au moins un monomère choisi dans le groupe comprenant l'oxyde de propylène (1,2-époxypropane) ; le 1,2-époxybutane (éthyloxirane), l'allylglycidyléther (1-allyloxy-2,3-époxypropane), le benzylglycidyléther (benzyloxyméthyloxirane), le tert-butylglycidyléther (tert-butoxyméthoxirane), l'éthoxyéthylglycidyléther, l'oxyde de styrène (phényloxirane), l'aziridine (éthylène-imine) et le thiirane (sulfure d'éthylène).

15. Composé selon la revendication 13 ou 14, **caractérisé en ce qu'**il présente 5 à 1000 groupes OH fonctionnels.

16. Composé selon une ou plusieurs des revendications 13 à 15, **caractérisé en ce qu'**il présente un poids moléculaire de 400 à 100 000 g/mole, de préférence de 10 000 à 30 000 g/mole et une polydispersité M̅_{w}/M̅ₙ de 1,3 à 2,3 et le rapport (N_{D}/N_{M}) du nombre (N_{D}) de sites de ramification (D) au nombre (N_{M}) de motifs de monomère (M) se situe dans la plage de 10 : 100 à 20 : 100.
